# EUROPÄISCHE PATENTANMELDUNG

(11) **EP 2 639 488 A1**
(43) Veröffentlichungstag der Anmeldung: **18.09.2013**
(21) Anmeldenummer: 13158830.3
(22) Anmeldetag: 12.03.2013
(51) Int. Cl.: F16L 57/04, F16L 11/12, F24D 3/16

(54) **Vorrichtung zum Verbinden von Heiz- oder Kühlregistern auf Deckenelementen**

(30) Priorität: 13.03.2012 DE 102012203910
(71) Anmelder: LINDNER AG, D-94424 Arnstorf (DE)
(72) Erfinder: Hörner, Michael, 94060 Pocking (DE)
(74) Vertreter: Klingseisen, Franz

(57) **Zusammenfassung**

Es wird eine Vorrichtung zum Verbinden von Heiz- oder Kühlregistern insbesondere auf Deckenelementen einer Heiz- oder Kühldecke vorgesehen, umfassend einen Schlauchverbinder (1) mit einem daran angeschlossenen Verbindungsschlauch (3), wobei zumindest der Verbindungsschlauch (3) brandhemmend bzw. schwerentflammbar ausgerüstet ist.

## Beschreibung

Die Erfindung betrifft eine Vorrichtung zum Verbinden von Heiz- oder Kühlregister insbesondere auf Deckenelementen, umfassend Schlauchanschlüsse und die mit den Schiauchanschlüssen verbundenen flexiblen Schläuche.

Eine Heiz- oder Kühldecke ist in der Regel aus Deckenelementen aufgebaut, auf denen in dem Hohlraum zwischen Heiz- bzw Kühldecke und Rohdecke des Gebäudes ein Heiz- oder Kühlregister auf den einzelnen Deckenelementen angebracht ist. Zur Verbindung der einzelnen Register, die in der Regel aus starr verlegten Kupferrohren bestehen, werden flexible Verbindungsschläuche an die Register angeschlossen, wobei die Schläuche wiederum durch Schlauchanschlüsse mit einer Versorgungsleitung oder einem anderen Register verbunden sind Diese Schlauchanschlüsse können als Steckverbinder oder dergleichen ausgebildet sein. Bekannt sind Steckverbinder aus Metall oder Kunststoff, die an Schläuchen aus mit Edelstahl umflochtenen Kautschuk- oder Kunststoff-Schläuchen angebracht sind. Mit solchen Steckverbindern und Schläuchen werden die Heiz- und Kühlregister untereinander und mit der Versorgungseinrichtung verbunden. Für die Verbindung der Register auf benachbarten Deckenelementen werden beispielsweise ca 1,5 m Verbindungs- und Anbindeschläuche benötigt.

Erfindungsgemäß werden zumindest die Verbindungsschläuche so ausgebildet, dass sie brandhemmend bzw. schwerentflammbar ausgebildet sind.

Die brandschutzhemmende Ausgestaltung derartiger Verbindungsschläuche und vorzugsweise auch der Schlauchanschlüsse bzw. Steckverbinder kann auf verschiedene Weise erreicht werden.

Nach einer ersten Ausfuhrungsform werden die Verbindungsschläuche und gegebenenfalls die Steckverbinder zumindest auf der einer möglichen Brandeinwirkung ausgesetzten Außenseite mit einem Brandhemmer beschichtet.

Nach einer weiteren Ausführungsform kann der Brandhemmer in Granulatform in das Kunststoffmaterial der Verbindungsschläuche und der Steckverbinder bei deren Herstellung eingemischt werden.

Bevorzugt wird an den aus Kunststoff hergestellten Verbindungsschläuchen sowohl eine flammhemmende Beschichtung vorgesehen als auch eine dem Material der Schläuche zugemischte flammhemmende Substanz.

Dadurch, dass die Verbindungskomponenten von Registern einer Heiz- oder Kühldecke selbstverlöschend oder brandhemmend bzw. brandverzögernd ausgerüstet werden, kann die Brandlast in einem Gebäude erheblich reduziert werden.

Die Erfindung wird beispielsweise anhand der Zeichnung näher erläutert. Es zeigen
- Fig. 1: eine schematische Draufsicht auf eine Kühldecke,
- Fig. 2: einen Steckverbinder teilweise im Schnitt mit daran angeschlossenen Verbindungsschläuchen, und
- Fig. 3: in der Darstellung der Fig. 1 eine weitere Ausführungsform

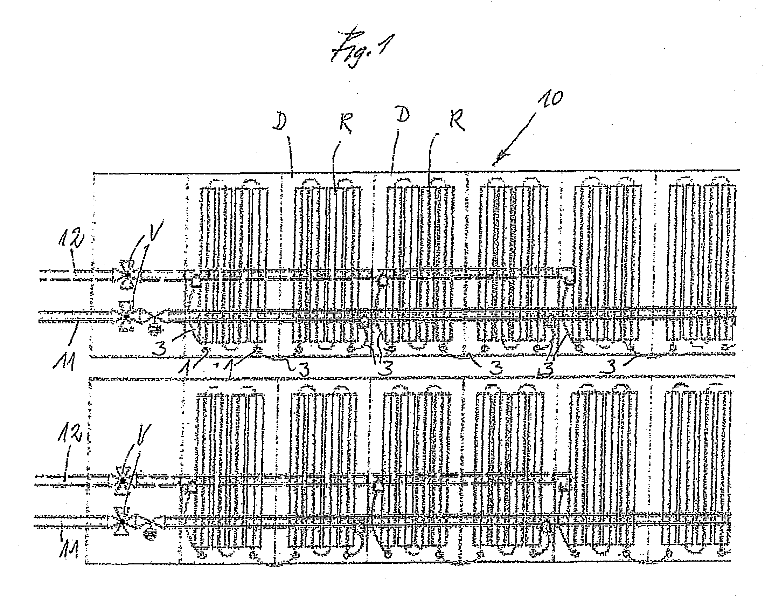

Fig. 1 zeigt eine Draufsicht auf eine Heiz- oder Kühldecke 10, die einzelne Deckenelemente D in Rechteckform aufweist, auf denen jeweils ein Heiz- bzw. Kühlregister R angeordnet ist. Mit 11 und 12 sind Rohrleitungen bezeichnet, von denen 11 beispielsweise den Zulauf und 12 den Rücklauf des Kühl- oder Heizmediums bildet. Die einzelnen Register R sind über Verbindungsschläuche 3 miteinander und mit den Vor- und Rücklaufleitungen 11, 12 verbunden Bei 1 sind Schlauchverbinder an den Registern R angedeutet. An den Vor- und Rücklaufleitungen 11, 12 können entsprechende Schlauchverbinder vorgesehen sein.

Fig. 1 zeigt ein Ausfuhrungsbeispiel einer Versorgung von einzelnen Registern R einer Heiz- oder Kühldecke 10. Es ist auch möglich, von den Ventilen V aus über Verbindungsschläuche die einzelnen Register R mit der Vor- und Rücklaufleitung 11 bzw, 12 zu verbinden In diesem Falle werden längere Verbindungsschläuche 3 benötigt.

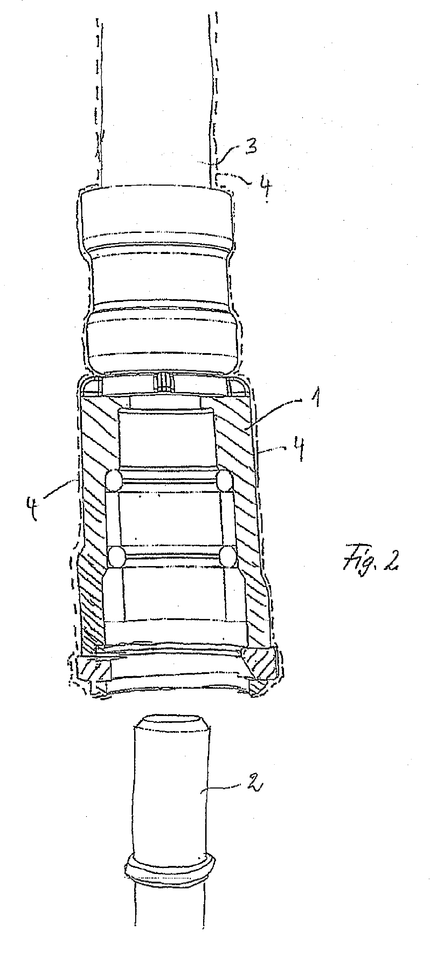

Fig. 2 zeigt einen an sich bekannten Schlauchverbinder in Form eines Steckverbinders mit einem muffenförmigen Aufnahmeteil 1 und einem Einsteckteil 2, das bei diesem Ausführungsbeispiel das Ende eines Registerrohres z.B, aus Kupfer ist. Das muffenförmige Aufnahmeteil 1 ist im Schnitt wiedergegeben An diesem ist ein Verbindungsschlauch 3 angeschlossen, der mit dem Muffenteil 1 fest verbunden ist, Am gegenüberliegenden Ende des Verbindungsschlauches 3 ist ebenfalls ein nicht dargestelltes Muffenteil 1 eines weiteren Schlauchverbinders angebracht.

Das Muffenteil 1 kann aus Kunststoff bestehen und der daran angeschlossene flexible Schlauch 3 ist meist aus Kautschuk oder Polybuten gefertigt.

Nach einer anderen Ausgestaltung besteht das Muffenteil 1 aus Metall und der daran angeschlossene Verbindungsschlauch 3 aus einem Kunststoff- oder Kautschukmaterial.

Bei der Ausführungsform nach Fig. 2 wird das Muffenteil 1 zusammen mit dem Verbindungsschlauch 3 mit einem brandhemmenden Material 4 auf der freiliegenden Außenseite beschichtet, wie dies durch eine gestrichelte Linie wiedergegeben ist.

Das Material des Brand- bzw. Flammhemmers 4 kann entweder selbstverlöschend oder bei Brandeinwirkung auch aufschäumend sein, um die damit beschichteten Komponenten vor einer Brandeinwirkung zu schützen. Das Material 4 kann auch brandhemmend bzw. nicht brennbar oder schwerentflammbar sein.

Auch wenn die Elemente 1 und 2 des Steckverbinders aus Metall bestehen, werden diese vorzugsweise mit einer Flammhemmschicht 4 beschichtet

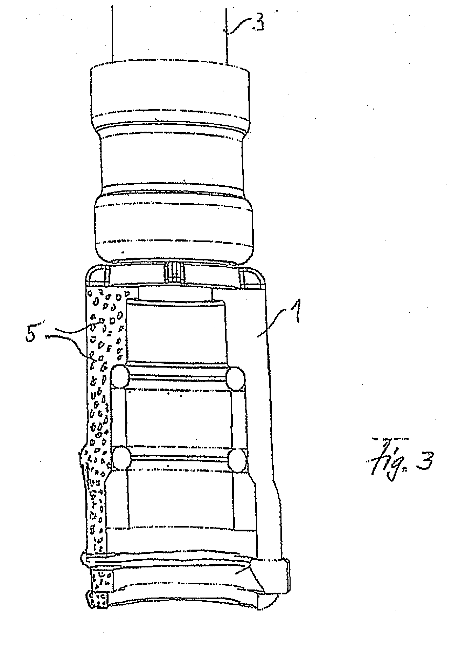

Fig. 3 zeigt eine Ausführungsform, bei der der Brand- bzw. Flammhemmer z.B in Granulatform 5 in das Kunststoffmaterial des Muffenteils 1 und auch in das Kunststoffmaterial der Verbindungsschläuche 3 eingelagert ist. Die Einlagerung des Flammhemmers 5 kann während der Herstellung der Steckverbindung und/oder der Verbindungsschläuche 3 in das Kunststoffmaterial eingemischt werden. Es ist auch die Zumischung eines flüssigen oder granulatförmigen Flammhemmers in das flüssige oder granutalförmige Ausgangsmaterial möglich.

Nach einer weiteren Ausgestaltung kann der Schlauchanschluss bzw. Steckverbinder 1, 2 mit den daran angeschlossenen Verbindungsschläuchen 3 mit einem flammhemmend ausgerüsteten Material umwickelt werden, wobei die Umwicklung auf das Muffenteil 1 und das Einsteckteil 2 getrennt aufgebracht wird, wenn auch das Einsteckteil 2 brandhemmend ausgerüstet wird, sodass die Steckverbindung trotz Umwicklung getrennt werden kann

Wenn bei der Ausführungsform nach Fig. 1 auch die Versorgungsleitungen 11 und 12 aus Kunststoff bestehen, so werden auch diese Leitungen 11, 12 vorzugsweise brandhemmend bzw. schwerentflammbar in der beschriebenen Weise ausgerüstet.

Es sind verschiedene Abwandlungen der beschriebenen Ausführungsformen möglich. So kann in den Verbindungsschläuchen 3 ein flammhemmendes Material 5 in das Kunststoffmaterial eingelagert sein, während das Muffenteil 1 bzw, der Schlauchverbinder 1, 2 selbst mit einem flammhemmenden Material 4 beschichtet ist.

Wenn beispielsweise das Muffenteil 1 aus Metall besteht und der Verbindungsschlauch 3 aus Kunststoffmaterial mit eingelagertem Flammhemmer 5 besteht, kann eine flammhemmende Beschichtung 4 sowohl auf dem Verbindungsschlauch 3 als auch auf dem Muffenteil 1 ausgebildet werden.

Nach einer weiteren Ausgestaltung kann die Verbindungseinrichtung sowohl auf der Außenseite mit einem flammhemmenden Material 4 beschichtet sein und zugleich ein Brand- bzw. Flammhemmer in das Kunststoffmaterial des Muffenteils 1 und der Verbindungsschläuche 3 eingelagert sein Hierdurch wird die Brandhemmung verstärkt.

Die beschriebenen, flammhemmend ausgerüsteten Verbindungseinrichtungen zwischen einzelnen Registern R werden in gleicher Weise auch an den Anschlüssen eines Registers an eine Versorgungseinrichtung wie bei 11 und 12 vorgesehen, sodass alle sich in dem Hohlraum über der Heiz- oder Kühldecke befindenden Anschluss- und Verbindungseinrichtungen der Register R brandhemmend ausgerüstet sind.

Die beschriebene brandhemmend ausgerüstete Verbindungseinrichtung für Heiz-oder Kühlregister ist nicht nur für Heiz- oder Kühldecken von Vorteil, sondern auch für andere Heiz- und Kühlflächen, an denen mehrere miteinander verbundene Register R angebracht sind. Dabei können die Verbindungsschläuche 3 und entsprechende Anschlussschläuche oder -rohre auch dann schwerentflammbar bzw. brandhemmend ausgerüstet sein, wenn sie z.B durch Mineralwolle oder ein anderes Isoliermaterial abgedeckt sind, sodass sie über der Heiz- oder Kühldecke nicht freiliegen.

Das für die brandhemmende Ausrüstung der Verbindungseinrichtungen verwendete Material kann unterschiedlich sein. Z.B können halogenierte oder auf Stickstoff basierte Flammschutzmittel vorgesehen werden. Ebenso sind Organophosphor-Flammschutzmittel oder anorganische Flammschutzmittel möglich.

## Patentansprüche

1. Vorrichtung zum Verbinden von Heiz- oder Kühlregistern (R) insbesondere auf Deckenelementen (D) einer Heiz- oder Kühldecke (10), umfassend einen Schlauchverbinder (1) mit einem daran angeschlossenen Verbindungsschlauch (3),
wobei zumindest der Verbindungsschlauch (3) brand hemmend bzw, schwerentflammbar ausgerüstet ist.

2. Vorrichtung nach Anspruch 1, wobei der Verbindungsschlauch (3) und/oder der Schlauchverbinder (1) mit einem flammhemmenden Material (4) beschichtet ist.

3. Vorrichtung nach Anspruch 1, wobei ein flammhemmendes Material (5) in das Kunststoffmaterial des Verbindungsschlauchs (3) und/oder des Schlauchverbinders (1) eingelagert ist

4. Verfahren zum Verbinden von Heiz- oder Kühlregistern (R) insbesondere auf Deckenelementen (8) einer Heiz- oder Kühldecke (10), wobei die einzelnen Register (R) untereinander und mit Versorgungsleitungen (11, 12) durch Verbindungsschläuche (3) verbunden werden,
**dadurch gekennzeichnet,**
**dass** die aus Kunststoffmaterial bestehenden oder ein Kunststoffmaterial enthaltenden Verbindungsschläuche (3) sowie aus Kunststoff bestehende Schlauchverbinder (1) und gegebenenfalls Versorgungsleitungen (11, 12) brandhemmend bzw. schwerentflammbar ausgerüstet werden.

5. Verfahren nach Anspruch 4, wobei die aus Kunststoff bestehenden Elemente der Registeranschlüsse mit einem flammhemmenden Material beschichtet werden.

6. Verfahren nach Anspruch 4, wobei ein flammhemmendes Material in das Kunststoffmaterial der Verbindungselemente bei deren Herstellung eingelagert wird.
